(19) Europäisches Patentamt

European Patent Office

Office européen des brevets

(11) **EP 1 071 828 B1**

(12) **EUROPEAN PATENT SPECIFICATION**

(45) Date of publication and mention
of the grant of the patent:
**07.09.2005 Bulletin 2005/36**

(21) Application number: **00905917.1**

(22) Date of filing: **02.02.2000**

(51) Int Cl.[7]: **C22B 59/00**, C22B 3/38,
C22B 3/32, B01D 11/04,
H01F 1/053, H01F 1/057

(86) International application number:
**PCT/US2000/002648**

(87) International publication number:
**WO 2000/047785 (17.08.2000 Gazette 2000/33)**

(54) **PROCESSING ROUTE FOR DIRECT PRODUCTION OF MIXED RARE EARTH METAL OXIDES BY SELECTIVE EXTRACTION**

VERFAHREN ZUR DIREKTEN ERZEUGUNG VON MISCHOXIDEN DER SELTENEN ERDMETALLE DURCH SELEKTIVE EXTRAKTION

PROCEDE DE TRAITEMENT VISANT A LA PRODUCTION DIRECTE D'OXYDES METALLIQUES DE TERRES RARES MELANGEES PAR EXTRACTION SELECTIVE

(84) Designated Contracting States:
**DE GB NL**

(30) Priority: **12.02.1999 CN 99102208**

(43) Date of publication of application:
**31.01.2001 Bulletin 2001/05**

(73) Proprietors:
• **Baotou Iron And Steel (Group) Co., Ltd.
Inner Mongolia 014010 (CN)**
• **GENERAL ELECTRIC COMPANY
Schenectady, NY 12345 (US)**

(72) Inventors:
• **BAO, Ding, Shan
Kun Qu Baotou (CN)**
• **KU, Hao, Xian
Kun Qu Baotou (CN)**
• **YAN, Bai
Kun Qu Baotou (CN)**
• **ZHEN, Ni, De
Kun Qu Baotou (CN)**
• **BENZ, Mark, Gilbert
Burnt Hills, NY 12027 (US)**
• **SHEI, Juliana, C.
Niskayuna, NY 12309 (US)**

• **DOYLE, Fiona, M.
Oakland, CA 94610 (US)**

(74) Representative: **Pedder, James Cuthbert et al
London Patent Operation,
General Electric International, Inc.,
15 John Adam Street
London WC2N 6LU (GB)**

(56) References cited:
**US-A- 5 015 447          US-A- 5 338 520**

• **DATABASE WPI Section Ch, Week 199542
Derwent Publications Ltd., London, GB; Class
E11, AN 1995-326852 XP002139434 & RU 2 030
463 C (GIREDMET RES DES INST), 10 March 1995
(1995-03-10)**
• **DATABASE WPI Section Ch, Week 199829
Derwent Publications Ltd., London, GB; Class
J01, AN 1998-331013 XP002139435 & RU 2 097
330 C (KARMANNIKOV V P), 27 November 1997
(1997-11-27)**
• **PATENT ABSTRACTS OF JAPAN vol. 014, no.
270 (C-0727), 12 June 1990 (1990-06-12) & JP 02
080530 A (JAPAN METALS & CHEM CO LTD), 20
March 1990 (1990-03-20)**

**Description**

BACKGROUND OF THE INVENTION

The present invention relates to methods for isolation of rare earth metals. In particular, the present invention relates to a method for the extraction of neodymium and praseodymium, and optionally cerium, for use in high-energy product magnets.

Neodymium is one of the lanthanide elements. The lanthanides and yttrium are collectively called rare earths.

Neodymium in particular is used in high-energy product, high-coercive force magnets for magnetic resonance imaging (MRI), computers and other applications. It is also used in decorative and welding glasses, and in amplifier glass for lasers. It has been demonstrated that for a number of applications, neodymium can be at least partially replaced by praseodymium and up to about 5% cerium. For example, applications such as computer drives are presently considered to require the high energy product, $(BH)_{max}$ and the high intrinsic coercivity, Hci of NdFeB magnets. However, energy product is actually fairly insensitive to the rare earth composition. In some cases, the neodymium may be partially replaced by praseodymium and a limited amount of cerium.

This substitution is economically attractive for two reasons. First, praseodymium currently has fewer applications than neodymium, and hence is less expensive. Secondly, all of the rare earths occur together geologically, and must be separated from each other by elaborate processing steps. A mixed rare earth feed for magnets would accordingly be less expensive to produce than an individual rare earth.

Although the rare earths occur in many minerals, bastnesite, monazite, and xenotime are the commercially important sources. Typical compositions of these minerals are shown in Table 1, although significant variations in these compositions occur. It is clear that these compositions differ from the distribution in igneous rocks, and that bastnesite and monazite are the most important sources of praseodymium, neodymium and other light rare earths.

Table 1.

| Rare earth contents of principal minerals, as percentage of total rare earth oxide | | | |
|---|---|---|---|
| Oxide | Bastnesite (California) | Monazite (Australia) | Xenotime (Malaysia) |
| $Y_2O_3$ | 0.1 | 2.1 | 60.8 |
| $La_2O_3$ | 32.0 | 23.0 | 0.5 |
| $CeO_2$ | 49.0 | 45.5 | 5.0 |
| $Pr_6O_{11}$ | 4.4 | 5.0 | 0.7 |
| $Nd_2O_3$ | 13.5 | 18.0 | 2.2 |
| $Sm_2O_3$ | 0.5 | 3.5 | 1.9 |
| $Eu_2O_3$ | 0.1 | 0.1 | 0.2 |
| $Gd_2O_3$ | 0.3 | 1.8 | 4.0 |
| $Tb_2O_3$ | | | 1.0 |
| $Dy_2O_3$ | | | 8.7 |
| $Ho_2O_3$ | | | 2.1 |
| $Er_2O_3$ | 0.1 | 1.0 | 5.4 |
| $Tm_2O_3$ | | | 0.9 |
| $Yb_2O_3$ | | | 6.2 |
| $Lu_2O_3$ | | | 0.4 |
| Total | 100.0 | 100.0 | 100.0 |

All commercial rare-earth minerals are concentrated by flotation or gravity methods, then are leached with aqueous solutions containing reagents which will at least partially dissolve the mineral. Such reagents are referred to as lixiviants. Bastnesite concentrates may be roasted before leaching in acid. This decomposes the carbonate in the lattice, thereby reducing acid consumption. Roasting may also oxidize cerium to Ce02, which does not readily dissolve in the acidic lixivant, instead reporting to the leach residue which is sold directly, or treated for cerium recovery. As with any other hydrometallurgical process, leaching is not completely selective, and impurities enter the leach solution. Contaminants such as iron, lead and thorium are removed before the rare earth separation by pH adjustment, precipitation and filtration.

After solution purification, at least some of the rare earths are separated from each other. Solvent extraction is now used commercially throughout the world to separate the rare earths, because it is more effective and amenable to continuous operation than the previously used processes, such as fractional crystallization, fractional precipitation or ion exchange. Some primary producers of rare earths also perform some downstream separation while others sell intermediate products such as salts or oxides, which are used as feed stock for other producers.

Solvent extraction is a solution purification process based on principle of partition. A solute distributes itself between two immiscible phases such that its equilibrium chemical potential in each phase is equal. A solvent extraction system generally comprises a chemically active, organic extractant, which is dissolved in a chemically inert diluent, to yield an organic solution that is immiscible with water (and generally less dense than water). The organic solution is contacted with an aqueous solution containing the solute of interest, in this case rare earth ions. The extractant forms rare earth-extractant complexes that move into the organic phase, in which their solubility is much higher than in the aqueous phase. Occasionally a modifier is added, to improve the solubility of the metal-extractant complex in the organic phase. After equilibration, the organic and aqueous phases are separated from each other. In the case of rare earth processing, many contacts are needed to achieve separation. The rare earths that have accumulated in the organic solution are then "stripped" back into an aqueous solution. This is most often accomplished by treating the combined organic extractants with appropriate chemical reagents to reverse the extraction reaction. These reactions differ for different classes of solvent extraction reagents.

Several rare earth processing routes have been described in the literature. However, these processes cannot directly produce a low-cost feed having a composition suitable for high energy-density magnets, i.e., a neodymium/praseodymium feed comprising up to about 5% by weight of total rare earth. A common, although not universal, first step in these process is to remove a large proportion of the cerium in the feed by chemical means. Cerium removal is possible because, unlike most of the other rare earths, cerium can be oxidized fairly readily to the +4 oxidation state. In this oxidation state cerium is much less soluble in dilute acid than those rare earths present in the +3 oxidation state, and thus may be separated by precipitation on selective leaching of the non-cerium rare earths. Removal of cerium is commonly practiced because it simplifies subsequent separations, and also significantly lowers the volume of material to be treated, thereby increasing the rate of production of non-cerium rare earths. One approach is to roast bastnesite concentrate before leaching in order to decompose carbonates and to oxidize cerium. The non-cerium rare earths are then leached from the resulting calcine. Other processes leach all of the rare earths, then oxidize cerium in the aqueous phase before precipitation and separation by filtration.

Other commercial processes leach minerals with an inorganic acid having anions that are also suitable for downstream solvent extraction. One example is leaching roasted bastnesite with HCl, leaving the rare earths as chlorides for solvent extraction. In contrast, where roasted bastnesite with traces of monazite is leached with sulfuric acid all the rare earths must then be extracted and stripped with hydrochloric acid to transfer to a chloride media. If solvating extractants are to be used, nitrate media are required, since nitrate is the only common anion that forms appreciable quantities of neutral rare earth complexes.

When isolating rare earth products from bastnesite or monazite by solvent extraction (whether or not cerium is chemically removed), the first separation generally splits the light rare earths (La, Ce, Pr, Nd) from the heavier rare earths (Sm, Eu, Gd, and so on). The most compelling reason for making this the first split is that the separation factor for Sm/Nd is high. This is because the element lying between neodymium and samarium, promethium, does not occur in nature. Another reason for performing the Nd/Sm split first is that the lighter elements (La, Ce, Pr, and Nd) are much more abundant in bastnesite and monazite than the heavier rare earths. The heavy rare earths can therefore be separated in much smaller scale equipment if they are separated from the lighter, more abundant elements. Finally, if using cation exchange or solvating extractants, the heavy rare earths report to the organic phase, while the light rare earths remain in the aqueous phase. Since the cost of the overall separation stage is much higher for greater volumes of the organic phase and greater amounts of metal being extracted, this cost is minimized by first removing the heavies using a small volume of organic - solvent.

In present commercial processes, neodymium is next separated from the other light rare earth elements, and precipitated as an oxalate or carbonate, which may then be calcined to oxide. The oxide may be electrolyzed after dissolution in a fluoride molten salt electrolyte, or it may be converted to chloride that is then electrolyzed. The mixture of lanthanum, cerium (if present) and praseodymium remaining in the process stream may be treated to separate each of these individual rare earths, or to recover a mixed oxide that can be sold as a polishing powder, for catalysts, for fertilizer, or other applications. Other processes for extraction of mixed feeds are known from RU-A-2030463, US-A-5015447 and US-A-5338520

None of these processes produce the appropriate mixture of neodymium and praseodymium with optional cerium of up to about 5%. Accordingly, there remains a need in the art for methods of processing rare earth feeds that will economically yield a mixture of rare earths suitable for high-energy permanent magnets.

SUMMARY OF THE INVENTION

According to a first aspect of the invention, there is provided a process for producing mixtures of praseodymium, neodymium and up to about 5% by weight of the total rare earths of cerium from mixed feeds of light rare earths, comprising:

(a) extracting praseodymium, neodymium and up to about 5% by weight of the total rare earths of cerium from a first aqueous solution from which samarium and the heavier rare earth metals along with yttrium have been removed, said first aqueous solution comprising chloride salts or sulfate salts of light rare earths into a first organic solution and
(b) separating the praseodymium, neodymium and up to about 5% by weight of the total rare earths of cerium from the first organic solution by

(i) stripping the praseodymium, neodymium and up to about 5% by weight of the total rare earths of cerium from the first organic solution into a second aqueous solution, or
(ii) precipitating the praseodymium, neodymium and up to about 5% by weight of the total rare earths of cerium from the first organic solution.

According to a second aspect of the invention, there is provided a process -for producing mixtures of praseodymium, neodymium and up to about 5% by weight of the total rare earths of cerium from mixed feeds of light rare earths, comprising:

(a) extracting praseodymium, neodymium and up to about 5% by weight of the total rare earths of cerium from a first aqueous solution from which samarium and the heavier rare earth metals along with yttrium have been removed, said first aqueous solution comprising chloride salts or sulfate salts of light rare earths into a first organic solution and
(b) selectively stripping the first organic solution to produce a second organic solution comprising neodymium and a second aqueous raffinate comprising praseodymium, neodymium, and up to about 5% by weight of the total rare earths of cerium by treatment with an aqueous solution with closely controlled pH, for cation exchange extractants or closely controlled concentration of anions for solvation extractants.

BRIEF DESCRIPTION OF THE DRAWINGS

FIG. 1 is a prior art graph showing the effect of equilibrium pH on the extraction of trivalent lanthanides by 0.5 M solutions of VERSATIC 10 in xylene at 20 C.

FIG. 2 is a prior art graph showing the effect of equilibrium pH on the extraction of trivalent lanthanides by 0.5 M solutions of naphthenic acid in xylene at 20 C.

FIG. 3 is a prior art graph comparing the pH0.5 values for extraction of trivalent lanthanides by 0.5 M VERSATIC acid (upper curve) and 0.5 M naphthenic acid (lower curve) in xylene.

FIG. 4 is a schematic diagram showing a process for extraction of metals using countercurrent contact of aqueous and organic phases in a multi-stage solvent extraction.

FIG. 5 is a schematic diagram showing a process for extraction of metals using contact of aqueous and organic phases in a multi-stage solvent extraction having three outlets.

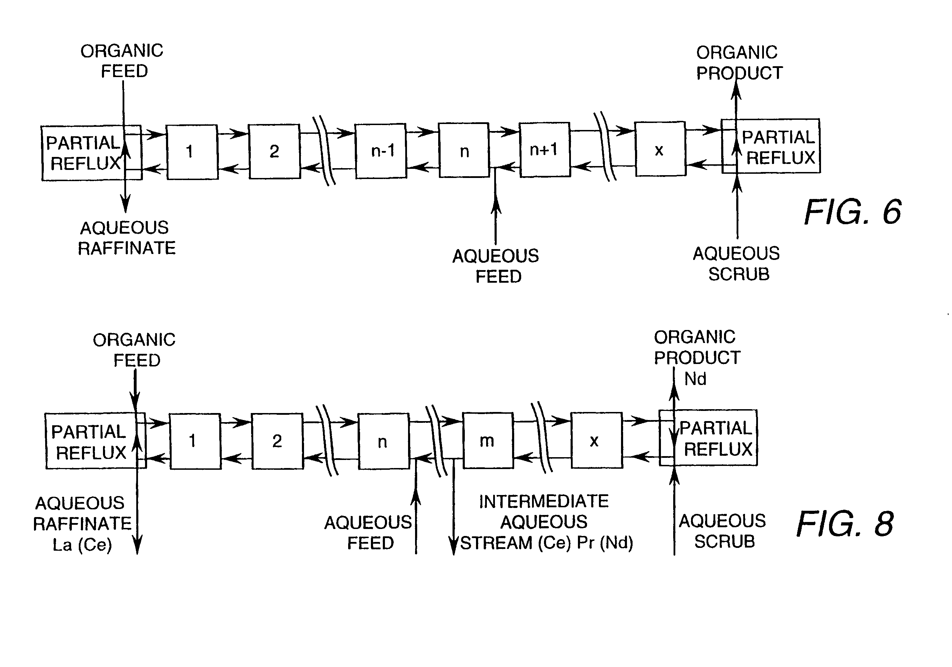

FIG. 6 is a schematic diagram showing a process for extraction of rare earth metals using contact of aqueous and organic phases in a multi-stage solvent extraction having three outlets and employing partial reflux.

FIG. 7 is a flow chart showing the general process of the present invention for the selective extraction of rare earths.

FIG. 8 is a schematic diagram showing one embodiment of the present invention for extraction of rare earth metals using contact of aqueous and organic phases in a multi-stage solvent extraction having three outlets and employing partial reflux to provide a neodymium-rich stream.

FIG. 9 is a schematic diagram showing another embodiment of the present invention for extraction of rare earth metals using contact of aqueous and organic phases in a multi-stage solvent extraction employing partial reflux and selective stripping to provide a neodymium-rich stream.

## DESCRIPTION OF THE INVENTION

The process of the present invention comprises extracting praseodymium, neodymium, and optional cerium from a first aqueous solution comprising chlorides or sulfates of light rare earths into an organic solution; and separating product praseodymium, neodymium, and optional cerium from the organic solution by stripping the praseodymium, neodymium, and optional cerium into a second aqueous solution, followed by precipitation from the second aqueous solution, or by precipitating the praseodymium, neodymium, and optional cerium directly from the organic solution. The process is particularly advantageous because it allows efficient production of a mixture of rare earths suitable for use for permanent magnets that is less expensive and more readily available than the presently used pure neodymium.

In a particularly advantageous embodiment, the product praseodymium, neodymium, and optional cerium are subjected to an optional separation step whereby neodymium is further separated as a separate product. The amount of neodymium left in the praseodymium and neodymium with optional cerium product may therefore be minimized, and pure neodymium by-product made available for sale for other applications. This new processing approach therefore allows for a variable recovery of by-product as dictated by market forces or other considerations.

Three different classes of solvent extraction reagents are suitable for separating rare earths. These include (a) liquid cation exchangers, generally organic acids which dissociate to form anions which can complex with rare earth cations; (b) solvation extractants, which displace solvating water from neutral rare earth complexes, yielding hydrophobic groups that partition into the organic solution; and (c) liquid anion exchangers, generally organic bases that form cations which then react with rare earth anions.

The reaction between a liquid cation exchanger and a rare earth cation can be represented schematically as:

$$Ln^{+3} + 3\ HA = \overline{LnA_3} + 3H^+ \tag{1}$$

wherein Ln denotes any rare earth, A denotes the organic anion, and overscoring denotes species present in the organic phase. In reality, the complex is likely to be polymeric, containing undissociated organic acid, and possibly hydroxide ions, having the general formula $[LnAm(OH)^{-3}msHA]x$. Regardless, extraction is promoted by increasing the aqueous phase pH. Stripping is promoted by contacting the rare earth-loaded organic solution with an aqueous acid. Two different classes of cation exchangers are used for rare earth separations, namely long-chain carboxylic acids, and organic derivatives of phosphorous acids.

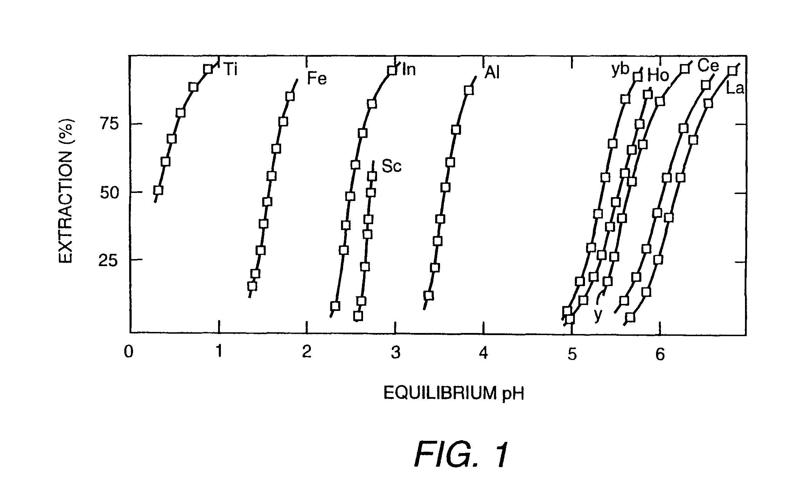

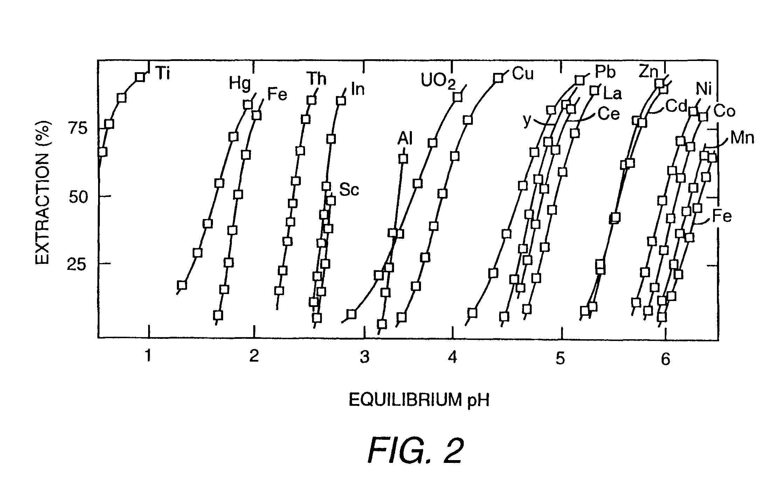

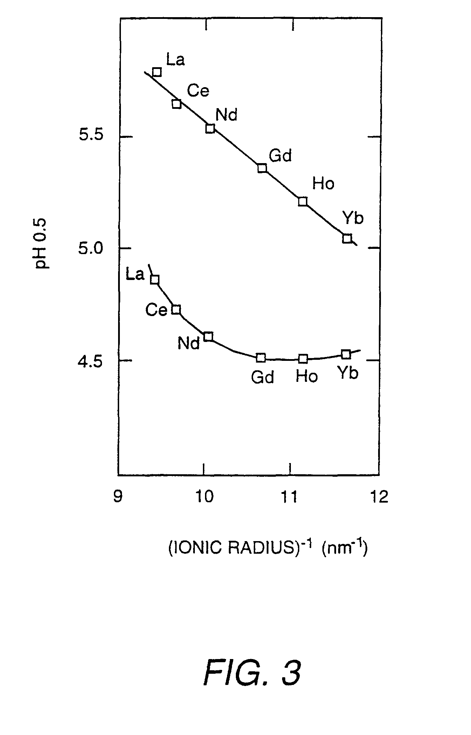

Carboxylic acids contain the functional group -COOH, which dissociates in polar solutions to form carboxylate ions, -COO⁻. Most naturally occurring carboxylic acids are too soluble in aqueous solutions to be useful; instead, synthetic acids are used. These are generally restricted tertiary monocarboxylic acids, for example neodecanoic acids available under the trade name VERSATIC from Shell Chemical, or naphthenic acids, which are carboxylic derivatives of saturated cyclical hydrocarbons. FIGS. 1 and 2 show that the percentage extraction of rare earths with VERSATIC 10 (FIG. 1) or with naptheneic acid in xylene (FIG. 2) is pH-dependent, with the heavy rare earths (Yb, Ho and Y) being extracted at lower pH than the light rare earths (Ce, La). Close inspection of FIGS. 1 and 2 furthermore reveals that yttrium, cerium, and lanthanum are extracted at lower pH by naphthenic acid than by VERSATIC 10. Although extraction at lower pH is desirable, because it requires less neutralization of an acidic feed, FIG. 3 shows that the pH0.5 (the pH at which the equilibrium concentrations of metals are equal in the organic and aqueous phases) for individual rare earths differ more for VERSATIC 10 than for naphthenic acid. As discussed below, this makes the VERSATIC acids better for separating rare earths. Those processes that have used carboxylic acids have mainly used aliphatic acids.

The most widely studied and used organophosphorus extractant for rare earths is bis(2-ethylhexyl)hydrogen phosphate, also known as di-(2-ethylhexyl) phosphoric acid, $D_2EHPA$, HDEHP, DEHPA, or EHPA. It is marketed variously as HOSTAREX PA 216, DP-8R, and P-204. Bis(2-ethylhexyl)hydrogen phosphate is more acidic than carboxylic acids, and will extract rare earths at significantly lower pH values than those used with neodecanoic or naphthenic acids, but it can also be difficult to strip. The aqueous solubility is significantly lower than that of carboxylic acids, which lowers the cost of makeup reagent during operation. Bis(2-ethylhexyl)hydrogen phosphate dimerizes in organic solutions, which lowers its polarity, and at low metal concentrations only one of the acid groups in the dimer dissociates and participates in the extraction reaction, as shown in Eq. 2:

$$Ln^{+3} + 3\ (R_2POOH)_2 = \overline{Ln(RPOO,R_2POOH)_3} + 3H^+ \tag{2}$$

At higher metal loadings more complex species form, but this results in gelation of the organic phase, which is highly undesirable because of the associated viscosity increase and phase separation problems. Various rare earths have been isolated using solvent extraction with bis(2-ethylhexyl)hydrogen phosphate, as disclosed by M.L.P. Reddy et al., in "Liquid-liquid Extraction Processes for the Separation and Purification of Rare Earths", in Mineral Processing and Extractive Metallurgy, Review, vol. 12, pp. 91-113 (1995).

Another organophosphorus reagent for solvent extraction of rare earths is 2-ethylhexyl phosphonic acid mono-2-ethylhexyl ester (EHEHPA, HEHEHP), marketed variously as PC-88A, SME 418, P-507, and IONQUEST 801. This reagent has gained popularity for rare earth separations, less for its extractive abilities than for its relative ease of stripping compared to bis(2-ethylhexyl)hydrogen phosphate. A process for separating rare earths using 2-ethylhexyl phosphonic acid mono-2-ethylhexyl ester is disclosed in Fr. Demande No. 2460275 (1981), and several laboratory separations using this reagent are outlined by Reddy et al., supra.

Many types of solvation extractants have been studied and used for general metallurgical separations. Tributylphosphate (TBP) appears to be as effective as any of the less common, more costly extractants for rare earths, hence most effort has focused on this reagent. Early work established that there was little extraction of rare earths from chloride solutions, whereas nitrate systems are more promising for separating rare earths lighter than samarium, provided the nitrate activity is high. The rare earths in neutral nitrate complexes are coordinated by the phosphoryl group of TBP, yielding an extractable complex. The overall reaction can be written as in Eq. 3,

$$Ln^{+3} + 3NO_3^- + 3\ TBP = Ln(NO_3)_3(TBP)_3 \tag{3}$$

although there would be few simple $Ln^{+3}$ cations in solution at the ionic strengths needed for effective extractions.

Of the various basic extractants, only quaternary ammonium salts such as trioctyl methylammonium nitrate (Aliquat 336) have proved promising for separating rare earths. Extraction and separation with this extractant were improved by using EDTA as an aqueous phase chelate. The overall extraction process can be written as in Eq. 4:

$$Ln^{+3} + 3\ NO_3^- + x\ (R_4N^+NO_3^-)n = Ln(NO_3)_3.xnR_4N^+NO_3^- \tag{4}$$

In nitrate media, Aliquat 336 extracts light rare earths more strongly than heavy ones, whereas in thiocyanate media the heavy rare earths are extracted more strongly. Yttrium is anomalous, acting as a heavy rare earth in nitrate media, and as a light rare earth in thiocyanate. This behavior has been utilized in a proposed process for preparing high purity $Y_2O_3$.

Design of effective solvent extraction processes for rare metals further requires an understanding of solvent extraction behavior at each stage of the extraction. In order to predict the behavior in a given solvent extraction stage, it is necessary to quantitatively describe the partition between organic and aqueous phases. In principle, the partition coefficient could be used, wherein:

$$\text{Partition coefficient} = \frac{\text{activity of metal in organic phase}}{\text{activity of metal in aqueous phase}} \tag{5}$$

This is a thermodynamic constant, dependent only on temperature, the nature of the solvents, and the nature of the solute. However, partition coefficients cannot be directly linked to mass transfer between phases, and are of limited utility in practical situations where activity coefficients deviate substantially from unity, vary as extraction proceeds, and are difficult to predict. Instead, distribution coefficients, D, are generally used:

$$D = \frac{\text{total concention of metal in organic phase}}{\text{total concentration of metal in aqueous phase}} \tag{6}$$

Although distribution coefficients are not thermodynamic constants, they are affected by the thermodynamics of the metal organic system. This is most readily demonstrated for liquid cation exchangers. Considering reaction 1, an equilibrium constant for extraction $K_{ex}$ may be represented by Eq. 7:

$$K_{ex} = \frac{\{\overline{LnA_3}\}\{H^{+2}\}^3}{\{\overline{HA}\}^3\{Ln^{3+}\}} \tag{7}$$

Like any other equilibrium constant, this is directly related to the Gibbs free energy of reaction for extraction. If $LnA_3$ and $Ln^{+3}$ are the only species in the organic and aqueous phases containing Ln, then:

$$D = \frac{[LnA_3]}{[Ln^{3+}]} \qquad (8)$$

If the solution is near ideal, i.e. $[Ln^{+3}]$ is low, and ionic strength is high, the activity coefficients of species can be considered constant, and incorporated in a revised equilibrium constant $K_{ex'}$, allowing the activities of Equation.3 and $Ln^{+3}$ in Eq. 8 to be replaced by concentrations:

$$D = \frac{K_{ex}'[\overline{HA_3}]^3}{[H^+]^3} \qquad (9)$$

Thus

$$\log D = \log Kex' + 3 \log {}_{\llcorner} \overline{HA} {}_{\lrcorner} - 3pH \qquad (10)$$

Extraction increases with increasing pH and extractant concentration, and depends on the equilibrium constant for extraction. Although more complex expressions result by considering more realistic compositions for the extracted species, it is nevertheless true that greater equilibrium constants for extraction yield larger distribution coefficients. In the case of solvation extractants, the position of equilibrium depends on the concentrations of ligands and their affinity for the rare earths, but there is still a thermodynamic basis for partition.

Finally, the separation factor between two species 1 and 2, whose distribution coefficients are $D_1$ and $D_2$, is defined as:

$$\beta_{1/2} = D1/D2 \qquad (11)$$

Although non-ideal behavior is sometimes observed because mixed complexes form, rare earths appear to behave ideally.

Turning now to the particular issues connected with separation of rare earths by solvent extraction, the decrease in ionic radii of the lanthanides with increasing atomic number causes an associated increase in acidity (ability to serve as electron acceptors). The Gibbs free energy of formation of rare earth-extractant complexes, and hence the distribution coefficients, consequently changes with atomic number. For cation exchangers and solvating extractants such as tributylphosphate in nitrate media, the distribution coefficient increases with increasing atomic number, whereas for anion exchange extractants the distribution coefficient generally decreases (although it is sensitive to the anion). However, these changes are slight, resulting in low separation factors.

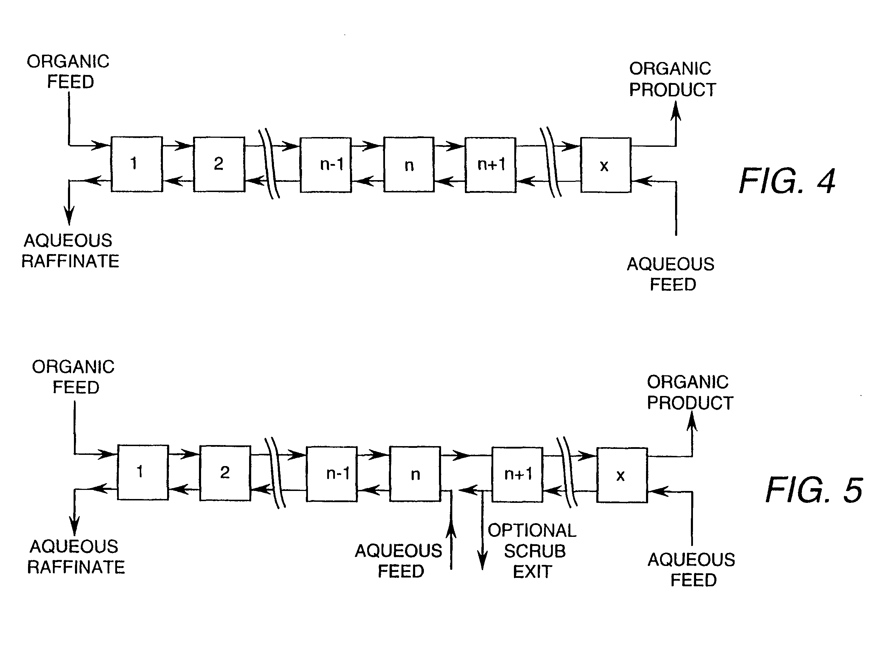

Table 2 summarizes separation factors for rare earths with cation exchange extractants and TBP. It must be emphasized that the separation factors depend strongly on the precise chemical conditions; these values are provided merely to illustrate typical values. For the cation exchange and solvating extractants included in Table 2, heavy rare earths are extracted more strongly than lighter ones, hence $\beta_{n/n-1} > 1$. $\beta_{n-1/n}$ is the reciprocal of $\beta_{n/n-1}$. Equilibration of organic solutions of the appropriate extractants and aqueous phases results in a slight enrichment of the organic phase in the heavier rare earths, and enrichment of the aqueous phase in the lighter ones. The separation factors are sufficiently low that the separation achieved in a single stage is only slight. Hence the organic and aqueous phases must be separated and the process must be repeated many times to separate one rare earth element from adjacent elements. The most efficient way to accomplish this is by countercurrent flow of the organic and aqueous streams, as shown schematically in FIG. 4.

Commercially, solvent extraction may be done in either staged contactors such as mixer settlers, or differential contactors such as columns. Mixer settlers are used exclusively for commercial hydrometallurgical separations, although differential contactors are used extensively in chemical plants. Mixer settlers contain a compartment within which organic and aqueous phases are mixed, with a residence time adequate to allow equilibration, and a larger compartment through with the mixed phases flow under quiescent conditions that allow separation of the aqueous and organic phases. Following the nomenclature for stages used in FIG. 4, the aqueous stream leaving the nth mixer settler would be pumped to the (n-1)th mixer settler, while the organic phase would be pumped to the (n+1)th mixer settler.

Table 2. Representative Separation Factors for Rare Earths with Different Solvent Extraction Reagents

| Pair | D2EHPA-HCl* | D2EHPA-HClO$_4$* | EHEHPA-HCl! | Versatic 911# | TBP-nitrate= |
|------|------|------|------|------|------|
| Ce/La | 2.3 | 3.0 | 6.8 | 3.00 | 2.0 |
| Pr/Ce | 2.8 | 2.1 | 2.0 | 1.60 | 1.5 |
| Nd/Pr | 1.7 | 1.4 | 1.6 | 1.32 | 1.5 |
| Sm/Nd | 5.0 | 6.8 | 10.7 | 2.20 | 2.0 |
| Eu/Sm | 2.2 | 1.9 | 2.3 | | |
| Gd/Eu | 1.6 | 1.4 | 1.5 | 1.96 | |
| Tb/Gd | 3.2 | 5.0 | 5.8 | | |
| Dy/Tb | 2.0 | 2.1 | 2.8 | | |
| Ho/Dy | 2.1 | 1.9 | 2.0 | 1.17 | |

15

| | | | |
|---|---|---|---|
| Er/Ho | 2.1 | 2.3 | 2.7 | 1.28 |
| Tm/Er | | 2.5 | 2.5 | 3.3 |
| Yb/Tm | | 1.8 | 3.1 | 3.6 |
| Lu/Yb | 2.2 | 1.9 | 1.9 | |

*Data from T.B. Pierce, P.F. Pech and R.S. Hobls, *J. Chromatograph*, 12 (1963) p.81

! Data from B.J. Balint, *J. Rare Earths*, 1 (1991) p. 386

# Data from M. Cox, "Solvent extraction in hydrometallurgy", in *Principles and Practices of Solvent Extraction*, eds. J. Rydeberg, C. Musikas, G.R. Choppin, Marcel Dekker, Inc. New York, NY 1992.

= Data from L. Sherrington, "Commercial Processes for Rare Earths and Thorium", in *Handbook of Solvent Extraction*, ed. T.C. Lo, M.H.I. Baird and C. Hanson, Wiley Interscience, New York, NY 1983, p. 717-723

In an operation using a cation exchange solvent extractant or a solvating extractant such as tributylphosphate, heavier rare earths have a stronger affinity for the organic extractant phase than the lighter rare earths. Hence, if mixed aqueous feed were introduced into one end of a bank of mixer settlers, the organic phase leaving that end would be somewhat enriched in heavier rare earths, but there would still be an appreciable amount of light rare earths in this stream because of the low separation factors. This difficulty is addressed by introducing the mixed aqueous feed near the middle of the bank of mixer settlers. A different aqueous stream is admitted into the end (the xth stage), to allow an appropriate number of stages for the light rare earths to be scrubbed from the organic phase back into the aqueous phase. The scrub solution may exit the process midway, or may continue on with the aqueous feed. This process is shown in FIG. 5.

The process shown in FIG. 5 would still be unsatisfactory for commercial operation if the organic and aqueous scrub phases entering the bank of mixer settlers contained no rare earths, because there would be appreciable dilution of the rare earths compared to that in the aqueous feed. If the aqueous scrub left the bank of mixer settlers mid-way, some means of recovering the rare earths in the solution would be needed. This problem is addressed by loading some of the light rare earths from the aqueous raffinate back into the organic phase entering the first mixer settler, and stripping some of the heavy rare earths from the organic product to add to the aqueous scrub. This procedure is called reflux, and in addition to minimizing dilution, it reduces the number of stages needed to effect a given separation. When operating under reflux, the mass transfer occurring at each stage becomes an exchange of different rare earths according to their affinity for an extractant, as exemplified by Eq. (11) for a liquid cation exchange extractant:

$$\overline{LaA_3} + Ce_{3+} = \overline{CeA_3} + La_{+3} \tag{11}$$

Most banks of mixer settlers are arranged to make a single separation between two adjacent rare earths. All rare earths lighter than the lighter of these two will report to the same phase as the lighter one, and all heavier than the heavier follow the heavier rare earth. Some separation schemes have three outlets, with a product stream removed from near the center of a bank of mixer settlers, enriched in one or more intermediate rare earths. In this case the overall separation is more than only adjacent elements. However, this approach requires many more separation stages, and does not produce a pure product from the central outlet.

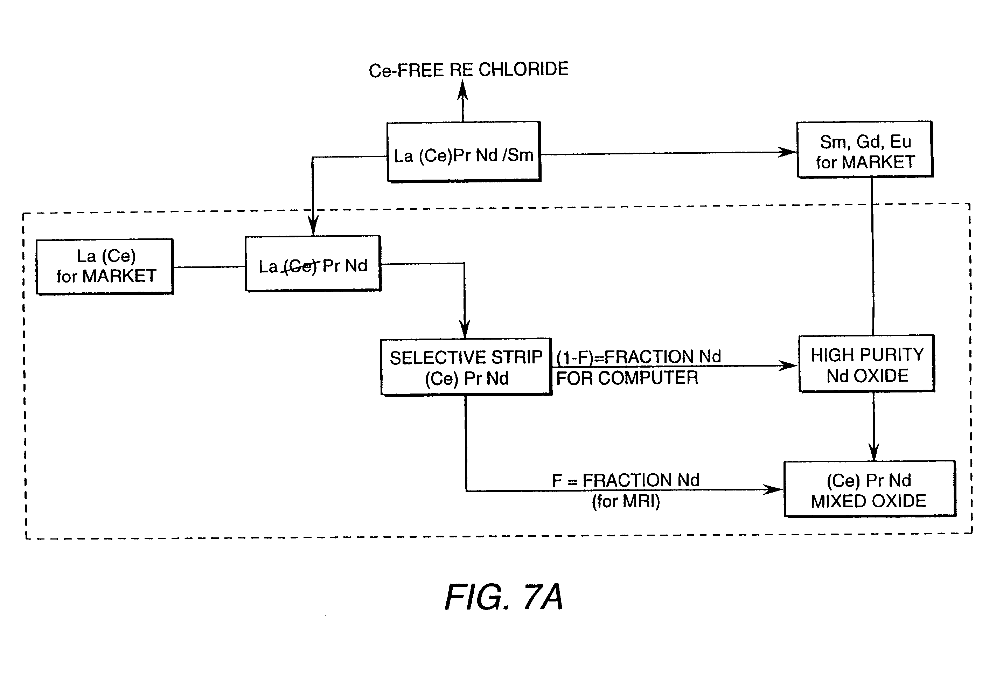

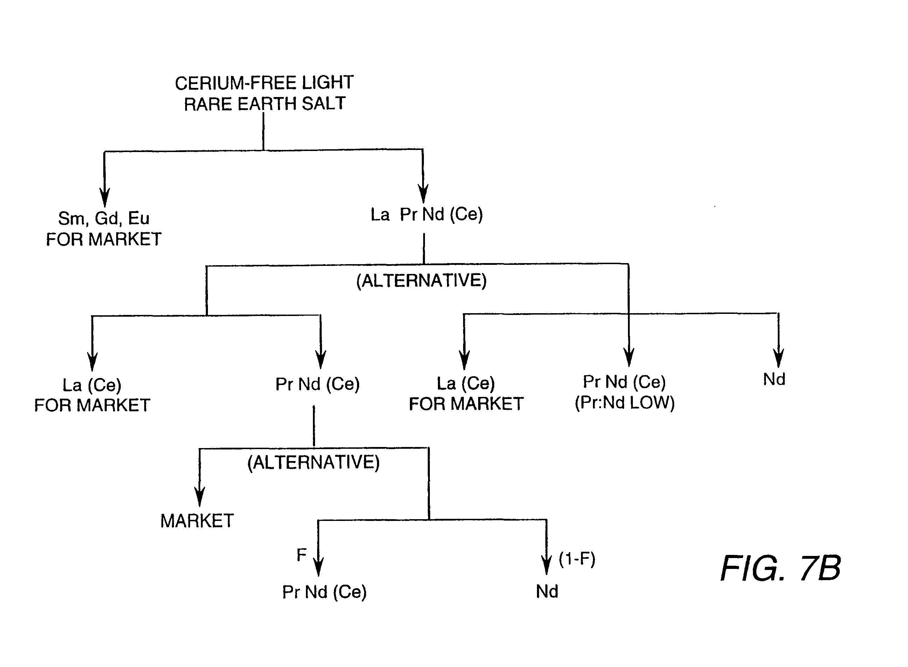

Referring now to FIG. 7, the various embodiments of the process of the present invention are shown generally. The process starts with a mixed rare earth, first aqueous feed. The feed should be an aqueous solution of rare earth chlorides or sulfates, from which samarium and the heavier rare earths (along with yttrium) have been removed. Preferably, most or all of the cerium has been removed by oxidation as is known in the art. Use of chloride anions is preferable to sulfate anions. Because the solubilities of rare earth chlorides in aqueous solutions are much higher than the solubilities of rare earth sulfates, the space-time yields from a given plant can be much higher for chlorides. Nitrate anions would be required if a solvating extractant such as tributylphosphate were to be used for the rare earth separations.

Overall, however, the process is insensitive to the source material and methods used to prepare the aqueous feed, thereby providing great flexibility in the operation of the process. For example, light rare earth chlorides or "cerium free" light rare earth chlorides from primary processors may be purchased, and the chlorides dissolved in water, incorporating removal of cerium (if necessary). Alternatively, the feed may be prepared by dissolving oxides or concentrate in acid, applying appropriate solid-liquid separation stages and purification processes as required. If still present in the purchased source material, samarium and heavier rare earths are first removed, for example by solvent extraction with cation exchange extractants or solvating extractants as is known in the art. Alternatively, lanthanum, cerium, praseodymium, and neodymium may have been extracted from a nitrate solution using an anion exchange extractant, then stripped to yield the aqueous feed. These steps are shown outside the broken lines in FIG. 7.

The mixed light rare earth, first aqueous feed solution is extracted to provide product praseodymium, neodymium, and optional cerium in a first organic solution. Extraction from the aqueous solution is by use of a cation exchange extractant or a solvation extractant. Suitable cation exchange extractants include, but are not limited to, neodecanoic acid, naphthenic acids, organophosphorus acids such as bis(2-ethylhexyl) hydrogen phosphate and 2-ethylhexyl phosphonic acid mono-2-ethylhexyl ester, and the like. A suitable solvation extractant includes, but is not limited to, tributylphosphate and the like. The precise conditions for the extraction are empirically determined, and depend on the precise chemistry of the extractant, the nature of the diluent and modifier, the proportions of the individual rare earths and their concentrations, the nature of the counter ions, the ionic strength of the aqueous solution and like considerations. Such determinations are readily made by those of ordinary skill in the art of solvent extraction.

Lanthanum and the balance of the cerium remain in the aqueous solution, the first aqueous raffinate. A marketable lanthanum product is recoverable from this stream, for example by precipitation of the oxalate or carbonate salt.

The maximum amount of cerium extracted into the organic phase is adjusted depending upon the desired rare earth products used in various applications. For example, where the neodymium subsequently reporting to the mixed rare earth oxide is for production of magnets, the maximum amount of cerium is about 5% by weight based on the total weight of the rare earths. The amount of extracted cerium is controlled by at least one of adjusting the cerium content of the feed (for example, by performing oxidative precipitation), by adjusting the conditions during extraction (for example, by closely controlling the pH using cation exchange extractants) or concentration of the anion (when using solvation extractants), or by adjusting the number of stages and reflux ratios used during solvent extraction. Such methods are known in the art, and are optimized based on the content and concentration of rare earths in the starting feed, the cost of solvent, the time required for each stage, and like considerations.

The organic solution contains product praseodymium and neodymium in the same ratio as in the source material, and optional cerium. In one embodiment of the present invention, the products are isolated or separated from the first organic solution to yield product praseodymium, neodymium, and optional cerium. Separation is preferably by one of two methods. In one method, the organic solution is completely stripped to transfer the praseodymium, neodymium, and optional cerium into a second aqueous solution. Extractants suitable for stripping include, but are not limited to those known in the art, for example, carboxylic acids, organophosphorus extractants and TBP. Mixed oxalate or carbonate salts of these rare earth elements are then precipitated from the second aqueous solution, and calcined to produce mixed oxides appropriate for producing low cost Nd/Pr-Fe-B permanent magnets.

Alternatively, the first organic solution undergoes precipitation stripping for example by treating the solution with an acidic solution of oxalate, or sparging with carbon dioxide in the presence of an aqueous phase to yield a mixed rare earth compound for direct sale or use, or from which oxides are prepared. Either approach yields a magnetic material containing praseodymium and neodymium in the ratios in which they occur in the mixed feed.

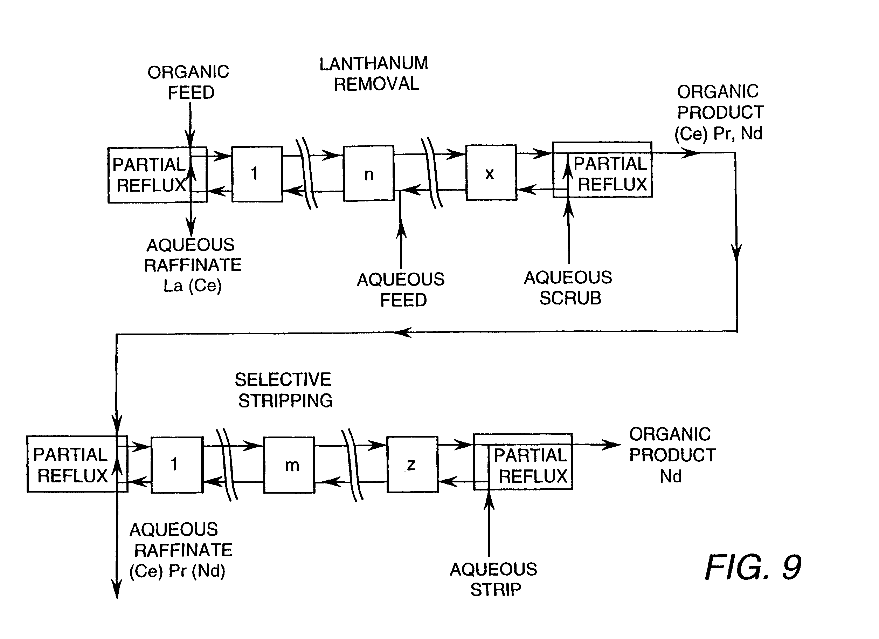

An alternative embodiment of the present invention comprises the further isolation of neodymium, thereby producing a praseodymium, neodymium, and optional cerium product depleted in neodymium. Recovery of neodymium alone requires additional separation stages. One process for such recovery is shown schematically in FIG. 8, wherein a bank of mixer settlers is operated with three outlets and partial reflux. The light rare earth first aqueous solution is extracted to produce three streams. The first is an aqueous stream comprising lanthanum (with some cerium if present). The second stream is an intermediate stream removed from the intermediate stage of the mixer settlers, comprising a mixture of praseodymium and neodymium product (with some if present). The third stream comprises a high purity neodymium in organic solution. This process does not generally yield high praseodymium-to-neodymium ratios in the intermediate stages.

Alternatively, a neodymium-containing stream is isolated by selective stripping as shown schematically in FIG. 9. The first aqueous solution comprising light rare earths and optional cerium is extracted as described above to produce a first organic solution comprising praseodymium, neodymium, and optional cerium. Selective stripping of the first organic solution results in removal of neodymium, praseodymium and optional cerium to a second aqueous raffinate, and production of a third organic solution comprising neodymium. Such selective stripping may be accomplished by selectively reversing the extraction as described hereinabove, for example by contacting cation exchange solvent extractants with strip solution has a pH low enough to strip praseodymium and optional cerium along with some of the neodymium, but not so low as to strip all of the neodymium for a solvation extractant. Selectivity is achieved by closely controlling the concentration of anion in the strip solution.

The amount of neodymium in the second aqueous raffinate is represented by fraction F, and the amount of neodymium in the third organic solution is represented by (1 - F). The fraction F can be adjusted by judicious control of the operating parameters of the selective stripping, for example pH, nitrate concentration and reflux ratio. The mixed praseodymium, neodymium, and optional cerium oxide is recovered, for example by precipitation of oxalate or carbonate salts, followed by calcining. The neodymium of the second organic stream may then be stripped to yield an aqueous solution from which the oxide of neodymium is recovered. F may be varied from close to zero to unity.

The following Examples are provided by way of example only, and should not be read to limit the scope of the invention.

A "cerium-free" rare earth chloride containing 45.0% of rare earth oxide equivalents is used as a feed (the chlorides contain six or seven waters of hydration), wherein the percent rare earth oxide equivalent of each oxide is as follows: $La_2O_3$ 50.06%, $CeO_2$ 5.00%, $Pr_6O_{11}$ 10.45%, $Nd_2O_3$ 29.45%, $Sm_2O_3$ 2.85%, $Eu_2O_3$ 0.38%, $Gd_2O_3$ 0.95%, $(Th-Lu)_2O_3$ 0.38%, and $Y_2O_3$ 0.48%.

EXAMPLE 1

An aqueous solution of the foregoing is first extracted with P-507 as a solvent extraction in a kerosene diluent to remove the heavy rare earths. The resulting aqueous solution is next extracted at a higher pH using P-507 (2-ethylhexyl phosphonic acid mono-2-ethylhexyl ester, EHEHPA) as a solvent extractant in a kerosene diluent. The laboratory scale test produces two different mixed Ce-Pr-Nd oxides, one with an Nd:Pr ratio of 3:1, which corresponds to the natural ratio in the Baotou concentrates and the "cerium free" rare earth chloride. This mixed oxide is produced by stripping all rare earths from the loaded $P_{507}$ extractant at low pH, then precipitating rare earths from the aqueous strip solution. The other mixed Ce-Pr-Nd oxide has an "inverse ratio" of Nd:Pr of 1:3. This mixed oxide was produced by selectively stripping praseodymium and 1/9 of the total neodymium from the loaded $P_{507}$ extractant at controlled pH, then precipitating rare earths from the aqueous strip solution.

EXAMPLE 2

This example produced only mixed oxide products having the inverse ratio, along with by-product neodymium oxide. All products contained less than 5% cerium of total rare earth, with praseodymium and neodymium comprising the balance of rare earths. The product was electrolytically reduced to make a mixed rare earth for producing a Pr/Nd-Fe-B magnetic material for testing in MRI applications.

Accordingly, 51.00 metric tons of the above cerium-free rare earth composition was first processed to remove heavy rare earths by treatment with $P_{507}$ solvent extractant in kerosene. The estimated yield of Sm, Eu, and Gd oxides were about 0.94 metric tons. An aqueous solution of the light rare earths (as chlorides) was then processed by the selective stripping method of the present invention. The praseodymium, neodymium, and some of the cerium were extracted using $P_{507}$ as extractant in kerosene. Selective stripping of the cerium, praseodymium, and 1/9 of the neodymium from the P-507 solution yielded an aqueous solution from which mixed product was precipitated. 11.31 metric tons of lanthanum and cerium oxides (>92% by weight lanthanum oxide); 5.34 metric tons of neodymium oxide; and 2.96 metric tons of mixed praseodymium, neodymium, and cerium oxides were isolated. The relative composition of the mixed oxide was 73.0% praseodymium oxide, 25.0% neodymium oxide, and 2.0% cerium oxide. Total oxides produced was 20.55 metric tons.

The process of the present invention produces a mixed rare-earth feed for magnets that is less expensive than individual rare earths, as well as methods for the optional production of neodymium depending on market conditions.

## EP 1 071 828 B1

**Claims**

1.   1. A process for producing mixtures of praseodymium, neodymium and up to about 5% by weight of the total rare earths of cerium from mixed feeds of light rare earths, comprising:

     (a) extracting praseodymium, neodymium and up to about 5% by weight of the total rare earths of cerium from a first aqueous solution from which samarium and the heavier rare earth metals along with yttrium have been removed, said first aqueous solution comprising chloride salts or sulfate salts of light rare earths into a first organic solution and
     (b) separating the praseodymium, neodymium and up to about 5% by weight of the total rare earths of cerium from the first organic solution by

     (i) stripping the praseodymium, neodymium and up to about 5% by weight of the total rare earths of cerium from the first organic solution into a second aqueous solution, or
     (ii) precipitating the praseodymium, neodymium and up to about 5% by weight of the total rare earths of cerium from the first organic solution.

2.   The process of claim 1, wherein the extracting is by a liquid cation exchange extractant or a solvation extractant.

3.   The process of claim 2, wherein the cation exchange extractant is selected from the group consisting of neodecanoic acids, naphthenic acids, bis(2-ethylhexyl) hydrogen phosphate, and 2-ethylhexyl phosphonic acid mono-2-ethylhexyl ester.

4.   The process of claim 2, wherein the solvation extractant is selected from the group consisting of tributylphosphate, bis (2-ethylhexyl)hydrogen phosphate and 2-ethylhexyl phosphonic acid mono- 2-ethylhexylester and mixtures thereof.

5.   The process of claim 1, wherein the first organic solution comprises an organic solvent selected from the group consisting of kerosene, other aliphatic or aromatic hydrocarbon liquids, an extractant, a modifier and mixtures thereof.

6.   The process of claim 1, wherein the extraction produces a first aqueous raffinate comprising lanthanum and optional cerium.

7.   The process of claim 1, wherein the stripping is by contacting with an aqueous solution comprising mineral acid, where the extractant is a liquid cation exchanger, or water or dilute nitrate solution, where the extractant is a solvation extractant.

8.   The process of claim 1, wherein the praseodymium, neodymium, and optional cerium are further precipitated from the second aqueous solution as mixed oxides, mixed oxalates or mixed carbonates.

9.   The process of claim 1, wherein the amount of cerium present in the first organic solution is controlled by at least one of adjusting the cerium content of the feed, by adjusting the conditions during extraction, or by adjusting the number of stages and reflux ratios used during solvent extraction.

10.  The process of claim 1, wherein the extracting further comprises production of a second organic solution comprising neodymium.

11.  The process of claim 1, further comprising selectively stripping the first organic solution to produce a second organic solution comprising neodymium and a second aqueous raffinate comprising praseodymium, neodymium, and cerium.

12.  The process of claim 11, wherein the selective stripping is by treatment with an aqueous solution with closely controlled pH for liquid cation exchange extractants, or closely controlled concentration of anions, for solvation extractants.

13.  A process -for producing mixtures of praseodymium, neodymium and up to about 5% by weight of the total rare earths of cerium from mixed feeds of light rare earths, comprising:

(a) extracting praseodymium, neodymium and up to about 5% by weight of the total rare earths of cerium from a first aqueous solution from which samarium and the heavier rare earth metals along with yttrium have been removed, said first aqueous solution comprising chloride salts or sulfate salts of light rare earths into a first organic solution and

(b) selectively stripping the first organic solution to produce a second organic solution comprising neodymium and a second aqueous raffinate comprising praseodymium, neodymium, and up to about 5% by weight of the total rare earths of cerium by treatment with an aqueous solution with closely controlled pH, for cation exchange extractants or closely controlled concentration of anions for solvation extractants.

**Patentansprüche**

1. Verfahren zur Herstellung von Mischungen aus Praseodym, Neodym und bis zu 5 Gew.-% der gesamten Seltenerden an Cer aus gemischten Einspeisungen von leichten seltenen Erden, bei welchem man:

   (a) Praseodym, Neodym und bis zu etwa 5 Gew.-% der gesamten Seltenerden an Cer aus einer ersten wässrigen Lösung extrahiert, aus welcher Samarium und die schwereren seltenen Erdenmetalle zusammen mit Yttrium entfernt wurden, wobei die erste wässrige Lösung Chloridsalze oder Sulfatsalze der leichten seltenen Erden in einer ersten organischen Lösung aufweist und

   (b) das Praseodym, Neodym und bis zu etwa 5 Gew.-% der gesamten seltenen Erden an Cer von der ersten organischen Lösung separiert indem man

      (i) das Praseodym, Neodym und bis zu etwa 5 Gew.-% der gesamten seltenen Erden an Cer aus der ersten organischen Lösung in eine zweite organische Lösung strippt, oder

      (ii) Praseodym, Neodym und bis zu etwa 5 Gew.-% der gesamten seltenen Erden an Cer aus der ersten organischen Lösung ausfällt.

2. Verfahren nach Anspruch 1, **dadurch gekennzeichnet, dass** die Extraktion mittels eines flüssigen Kationaustauscherextraktionsmittels oder eines Solvatationsextraktionsmittels geschieht.

3. Verfahren nach Anspruch 2, **dadurch gekennzeichnet, dass** das Kationaustauscherextraktionsmittel ausgewählt ist aus der Gruppe bestehend aus Neodecansäuren, Naphthalinsäuren, Bis-(2-ethylhexyl)-hydrogenphosphat und 2-Ethylhexylphosphonsäuremono-2-ethylhexylester.

4. Verfahren nach Anspruch 2, **dadurch gekennzeichnet, dass** das Solvatationsextraktionsmittel ausgewählt ist aus der Gruppe bestehend aus Tributylphosphat, Bis-(2-ethylhexyl)-hydrogenphosphat und 2-Ethylhexylphosphonsäuremono-2-ethylhexylester und Mischungen daraus.

5. Verfahren nach Anspruch 1, **dadurch gekennzeichnet, dass** die erste organische Lösung ein organisches Lösungsmittel umfasst, ausgewählt aus der Gruppe bestehend aus Kerosin, anderen flüssigen aliphatischen oder aromatischen Kohlenwasserstoffen, einem Extraktionsmittel, einem Modifizierer und Mischungen daraus.

6. Verfahren nach Anspruch 1, **dadurch gekennzeichnet, dass** die Extraktion ein erstes wässriges Raffinat ergibt, das Lanthan und optional Cer aufweist.

7. Verfahren nach Anspruch 1, **dadurch gekennzeichnet, dass** das Strippen durch Kontaktieren mit einer wässrigen Lösung geschieht, die Mineralsäure aufweist, wo das Extraktionsmittel ein flüssiger Kationaustauscher ist, oder mit Wasser oder verdünnter Nitratlösung, wo das Extraktionsmittel ein Solvatationsextraktionsmittel ist.

8. Verfahren nach Anspruch 1, **dadurch gekennzeichnet, dass** Praseodym und gegebenenfalls Cer weiter aus der zweiten wässrigen Lösung als gemischte Oxide, gemischte Oxalate oder gemischte Carbonate ausgefällt werden.

9. Verfahren nach Anspruch 1, **dadurch gekennzeichnet, dass** die Menge an in der ersten organischen Lösung vorhandenem Cer durch Einstellung des Cergehalts der Einspeisung, durch Einstellung der Bedingungen während der Extraktion und/oder durch Einstellung der Zahl der Stufen und der während der Lösungsmittelextraktion verwendeten Rückflussverhältnisse kontrolliert wird.

10. Verfahren nach Anspruch 1, **dadurch gekennzeichnet, dass** das Extrahieren weiterhin die Herstellung einer zweiten organischen Lösung umfasst, welche Neodym aufweist.

11. Verfahren nach Anspruch 1, bei welchem man weiterhin die erste organische Lösung selektiv zur Herstellung einer zweiten organischen Lösung strippt, die Neodym aufweist, und eines zweiten wässrigen Raffinats, welches Praseodym, Neodym und Cer aufweist.

12. Verfahren nach Anspruch 1, **dadurch gekennzeichnet, dass** das selektive Strippen für den Fall von flüssigem Kationaustauschextraktionsmittel durch die Behandlung mit einer wässrigen Lösung mit engkontrolliertem pH geschieht oder für den Fall der Solvatationsextraktion durch engkontrollierte Konzentration der Anionen.

13. Verfahren zur Herstellung von Mischungen des Praseodyms, Neodyms und bis zu etwa 5 Gew.-% der gesamten seltenen Erden an Cer aus gemischten Einspeisungen von leichten seltenen Erden, bei welchem man:

    (a) Praseodym, Neodym und bis zu etwa 5 Gew.-% der gesamten seltenen Erden an Cer aus einer ersten wässrigen Lösung, aus der Samarium und die schwereren seltenen Erdenmetalle zusammen mit Yttrium entfernt worden sind, wobei die erste wässrige Lösung Chloridsalze oder Sulfatsalze der leichten seltenen Erden aufweisen, in eine erste organische Lösung extrahiert und

    (b) die erste organische Lösung selektiv zur Herstellung einer zweiten organischen Lösung, die Neodym aufweist, und eines zweiten wässrigen Raffinats, das Praseodym, Neodym und bis zu etwa 5 Gew.-% der gesamten seltenen Erden an Cer aufweist, durch Behandlung mit einer wässrigen Lösung mit engkontrolliertem pH, für Kationenaustauscherextraktionsmittel, oder engkontrollierter Konzentration der Anionen für Solvatationsextraktionsmittel, strippt.

**Revendications**

1. Procédé pour produire des mélanges de praséodyme, de néodyme et de cérium à raison d'un maximum d'environ 5% en poids du total des terres rares, à partir d'un mélange de sources de terres rares légères, comprenant les étapes consistant à :

    (a) extraire du praséodyme, du néodyme et du cérium à raison d'un maximum d'environ 5% en poids du total des terres rares à partir d'une première solution aqueuse dont du samarium et les métaux du groupe des terres rares les plus lourds, ainsi que de l'yttrium ont été séparés, ladite première solution aqueuse étant constituée par des sels de chlorures ou des sels de sulfates de terres rares légères dans une première solution organique ; et
    (b) séparer de la première solution organique le praséodyme, le néodyme et le cérium à raison d'un maximum d'environ 5% en poids du total des terres rares, en

        (i) extrayant de la première solution organique le praséodyme, le néodyme et le cérium à raison d'environ 5% en poids du total des terres rares pour obtenir une deuxième solution aqueuse, ou
        (ii) précipitant le praséodyme, le néodyme et le cérium à raison d'un maximum d'environ 5% en poids du total des terres rares à partir de la première solution organique.

2. Procédé selon la revendication 1, dans lequel l'extraction s'effectue à l'aide d'un solvant liquide d'extraction par échanges de cations ou d'un solvant d'extraction par solvatation.

3. Procédé selon la revendication 2, dans lequel le solvant d'extraction pour échanges de cations est choisi dans le groupe comprenant des acides néocapriques, des acides naphténiques, le phosphate de bis (2-éthylhexyle) d'hydrogène, et l'esther mono-2-étylhexyle d'acide 2-éthylhexile phosphonique.

4. Procédé selon la revendication 2, dans lequel le solvant d'extraction par solvatation est choisi dans le groupe comprenant le tributylphosphate, le phosphate de bis (2-éthylhexyle) hydrogène et l'esther mono-2-étylhexyle d'acide 2-éthylhexyle phosphonique, et des mélanges de ceux-ci.

5. Procédé selon la revendication 1, dans lequel la première solution organique est constituée par un solvant organique choisi dans le groupe comprenant le kérosène, d'autres hydrocarbures liquides aliphatiques ou aromatiques, un solvant d'extraction, un modificateur et des mélanges de ceux-ci.

6. Procédé selon la revendication 1, dans lequel l'extraction produit un premier raffinat aqueux contenant du lanthane et éventuellement du cérium.

7. Procédé selon la revendication 1, dans lequel la séparation se fait par mise en contact avec une solution aqueuse contenant un acide minéral, le solvant d'extraction étant un échangeur liquide de cations, ou une solution d'eau ou de nitrates dilués, le solvant d'extraction étant un solvant d'extraction par solvatation.

8. Procédé selon la revendication 1, dans lequel le praséodyme, le néodyme et éventuellement le cérium sont en outre amenés à précipiter à partir de la deuxième solution aqueuse sous la forme de mélange d'oxydes, de mélange d'oxalates ou de mélange de carbonates.

9. Procédé selon la revendication 1, dans lequel la quantité de cérium présente dans la première solution organique est déterminée en ajustant la teneur en cérium de la source d'alimentation et/ou en ajustant les conditions pendant l'extraction et/ou en ajustant le nombre d'étapes et les taux de reflux utilisés pendant l'extraction par solvant.

10. Procédé selon la revendication 1, dans lequel l'extraction comporte en outre la production d'une deuxième solution organique contenant du néodyme.

11. Procédé selon la revendication 1, comprenant en outre la séparation sélective de la première solution organique pour produire une deuxième solution organique contenant du néodyme et un deuxième raffinat aqueux contenant du praséodyme, du néodyme et du cérium.

12. Procédé selon la revendication 11, dans lequel la séparation sélective s'effectue par traitement à l'aide d'une solution aqueuse avec un pH ajusté de manière précise pour les solvants d'extraction liquides par échanges de cations, ou une concentration d'anions à réglage très précis pour les solvants d'extraction par solvatation.

13. Procédé pour produire des mélanges de praséodyme, de néodyme et de cérium à raison d'un maximum d'environ 5% en poids du total des terres rares à partir d'un mélange de sources d'alimentation en terres rares légères, comprenant les étapes consistant à :

   (a) extraire le praséodyme, le néodyme et le cérium à raison d'environ 5% en poids du total des terres rares à partir d'une première solution aqueuse dont du samarium et les métaux du groupe des terres rares les plus lourds, ainsi que de l'yttrium, ont été séparés, ladite première solution aqueuse étant constituée par des sels de chlorures ou des sels de sulfates de terres rares légères dans une première solution organique ; et
   (b) séparer sélectivement la première solution organique pour produire une deuxième solution organique contenant du néodyme et un deuxième raffinat aqueux contenant du praséodyme, du néodyme et du cérium à raison d'un maximum d'environ 5% en poids du total des terres rares par traitement à l'aide d'une solution aqueuse à pH ajusté d'une manière très précise, pour les solvants d'extraction par échanges de cations, ou une concentration d'anions à ajustement très précis pour les solvants d'extraction par solvatation.

*FIG. 1*

FIG. 2

FIG. 3

ORGANIC
FEED

ORGANIC
PRODUCT

| 1 | 2 | | n-1 | n | n+1 | | x |

AQUEOUS
RAFFINATE

AQUEOUS
FEED

*FIG. 4*

ORGANIC
FEED

ORGANIC
PRODUCT

| 1 | 2 | | n-1 | n | n+1 | | x |

AQUEOUS
RAFFINATE

AQUEOUS
FEED

OPTIONAL
SCRUB
EXIT

AQUEOUS
FEED

*FIG. 5*

ORGANIC FEED

PARTIAL REFLUX

AQUEOUS RAFFINATE

1

2

n-1

n

AQUEOUS FEED

n+1

x

ORGANIC PRODUCT

PARTIAL REFLUX

AQUEOUS SCRUB

*FIG. 6*

ORGANIC FEED

PARTIAL REFLUX

AQUEOUS RAFFINATE La (Ce)

1

2

n

AQUEOUS FEED

m

INTERMEDIATE AQUEOUS STREAM (Ce) Pr (Nd)

x

ORGANIC PRODUCT Nd

PARTIAL REFLUX

AQUEOUS SCRUB

*FIG. 8*

Ce-FREE RE CHLORIDE

FIG. 7A

EP 1 071 828 B1

CERIUM-FREE LIGHT
RARE EARTH SALT

Sm, Gd, Eu
FOR MARKET

La  Pr Nd (Ce)

(ALTERNATIVE)

La (Ce)
FOR MARKET

Pr Nd (Ce)

La (Ce)
FOR MARKET

Pr Nd (Ce)
(Pr:Nd LOW)

Nd

(ALTERNATIVE)

MARKET

F

Pr Nd (Ce)

(1-F)

Nd

*FIG. 7B*

ORGANIC
FEED

LANTHANUM
REMOVAL

ORGANIC
PRODUCT
(Ce) Pr, Nd

PARTIAL
REFLUX → 1 → n → x → PARTIAL
REFLUX

AQUEOUS
RAFFINATE
La (Ce)

AQUEOUS
FEED

AQUEOUS
SCRUB

SELECTIVE
STRIPPING

ORGANIC
PRODUCT
Nd

PARTIAL
REFLUX → 1 → m → z → PARTIAL
REFLUX

AQUEOUS
RAFFINATE
(Ce) Pr (Nd)

AQUEOUS
STRIP

*FIG. 9*

EP 1 071 828 B1